Europäisches Patentamt

European Patent Office

Office européen des brevets

(19)

(11) Veröffentlichungsnummer: **0 164 015**
**B1**

(12) **EUROPÄISCHE PATENTSCHRIFT**

(45) Veröffentlichungstag der Patentschrifft:
17.01.90

(21) Anmeldenummer: 85106227.3

(22) Anmeldetag: 21.05.85

(51) Int. Cl.⁴: **H 04 Q   3/545,** G 06 F   11/20

(54) Schaltungsanordnung für zentralgesteuerte Fernmeldevermittlungsanlagen, insbesondere Fernsprechvermittlungsanlagen, mit zwei parallel arbeitenden Zentralsteuerwerken und Ersatzschaltung im Störungsfall.

(30) Priorität: 30.05.84 DE 3420281

(43) Veröffentlichungstag der Anmeldung:
11.12.85 Patentblatt 85/50

(45) Bekanntmachung des Hinweises auf die Patenterteilung:
17.01.90 Patentblatt 90/03

(84) Bennante Vertragsstaaten:
AT CH DE FR GB IT LI NL SE

(56) Entgegenhaltungen:
DE-A-2 460 259
DE-A-2 727 983

TELCOM REPORT, Band 8, Heft 2, März/April 1985, Seiten 107-112, Passau, DE; H. BERNDT: "SSP 112R-ein Vermittlungsrechner für den EWSD-Einsatz in schwach besiedelten Regionen"
TELCOM REPORT, Band 7, Nr. 2, März/April 1984, Seiten 93-98, Passau, DE; H. KNAPEK u.a.: "Sicherungstechnik im Koordinationsprozessor SSP112D des Digitalvermittlungssystems EWSD"
IBM TECHNICAL DISCLOSURE BULLETIN, Band 16, Nr. 5, Oktober 1973, Seiten 1586-1588, New York, US; W.G. SWENSON; "Alternate path control systems"
INTERNATIONAL SWITCHING SYMPOSIUM, Band 2, Session 34A, Paper 4, Seiten 1-7, 7-11 Mai 1984, Florence, IT; M. DABROWSKI u.a.: "The hardware and software design for medium size digital switching systems"

(73) Patentinhaber: Siemens Aktiengesellschaft
Wittelsbacherplatz 2
D-8000 München 2 (DE)

(72) Erfinder: Eher, Manfred
Voss-Strasse 13
D-8000 München 90 (DE)

(56) Entgegenhaltungen: (fortsetzung)
ELEKTROTECHNISCHE ZEITSCHRIFT ETZ-A, Band 99, Nr. 5, Mai 1978, Seiten 260-266, Berlin, DE; M. EICHNER: "Parallel-arbeitendes Doppelrechnersystem - ein ausfallsicheres Rechnerkonzept"
INTERNATIONAL SWITCHING SYMPOSIUM, Session 20A3, 7-11 Mai 1979, Seiten 213-220, Paris, FR; H. KOK: "Le système de commutation PRX-D"
10th INTERNATIONAL SYPOSIUM ON FAULTTOLERANT COMPUTING (FTCS-10), 1-3 Oktober 1980, Seiten 231-237, Kyoto, JP; A. BELLMAN u.a.: "AFDT1 redundancy plan"
PROCEEDINGS OF THE NATIONAL ELECTRONICS CONFERENCE, Band 36, Oktober 1982, Seiten 175-180, Oak Brook, Illinois, US; J.L. CLEMENTS: "Network maintenance for a microprocessor controlled pulse code modulation telephone switching system"
INTERNATIONAL SWITCHING SYMPOSIUM, Heft 41C4, 7-11 Mai 1979, Seiten 956-961, Paris, FR; D.T. ARGOE u.a.: "Rétablissement du système dans le calculateur 2 B"
SIGNAL UND DRAHT, Band 76, Nr. 3, März 1984, Seiten 35-41, Darmstadt, DE; H. BRAUER: "Sicheres Mikrorechnersystem LOGISIRE"

LIBERGRAF, STOCKHOLM 1990

2

## Beschreibung

Die Erfindung betrifft eine Schaltungsanordnung für zentralgesteuerte Fernmeldevermittlungsanlagen, insbesondere Fernsprechvermittlungsanlagen, mit zwei parallel arbeitenden Zentralsteuerwerken und zwei Gruppen von teilzentralen Schalteinrichtungen und mit zwei jeweils ein Zentralsteuerwerk mit den teilzentralen Schalteinrichtungen einer Gruppe verbindenden bidirektionalen Datenbusleitungen, und mit zwei die teilzentralen Schalteinrichtungen jeweils einer Gruppe mit dem der anderen Gruppe von teilzentralen Schalteinrichtungen zugeordneten Zentralsteuerwerk verbindenden bidirektionalen Datenbushilfsleitungen, und mit Parallelbetrieb beider Zentralsteuerwerke im Datenaustausch mit den teilzentralen Schalteinrichtungen der ihnen jeweils zugeordneten Gruppe über die betreffende bidirektionale Datenbusleitung und mit bei Betriebsunterbrechung eines Zentralsteuerwerkes oder seiner zugeordneten Datenbusleitung vorgesehenem Ersatzschaltebetrieb über jeweils die Datenbushilfsleitung, die von dem jeweils anderen Zentralsteuerwerk zu den teilzentralen Schaltwerken der Gruppe des von der Betriebsunterbrechung betroffenen Zentralsteuerwerks verläuft, und mit in die Datenbushilfsleitungen eingeschleiften bidirektionalen Busverstärkern, von denen je zwei in eine von einem Zentralsteuerwerk zu den teilzentralen Schalteinrichtungen der jeweils anderen Gruppe verlaufende Datenbushilfsleitung geschaltet sind, und von denen jeweils ein erster mit den teilzentralen Schalteinrichtungen der einen Gruppe und ein zweiter mit dem Zentralsteuerwerk der anderen Gruppe von teilzentralen Schalteinrichtungen verbunden ist.

Eine Schaltungsanordnung dieser ergibt sich bereits aus den Erläuterungen in dem Fachbuch "Rechnergesteuerte Vermittlungssysteme" von Peter R. Gerke (Springer Verlag Berlin/Heidelberg/New York 1972), Seite 109. Ein Ersatzschaltebetrieb in der darin beschriebenen bekannten Weise setzt voraus, daß jedes der beiden Zentralsteuerwerke mit jeder Schalteinrichtung jeder der beiden Gruppen verbindbar ist. Für den im störungsfreien Zustand abzuwickelnden Parallelbetrieb sind die beiden voneinander unabhängigen und jeweils einem Zentralsteuerwerk und seiner Gruppe von Schalteinrichtungen zugeordneten beiden Datenbusleitungen erforderlich. Die beiden zusätzlichen Datenbushilfsleitungen sind für den Ersatzschaltebetrieb erforderlich, damit jeweils ein Zentralsteuerwerk mit den Schalteinrichtungen der dem anderen (momentan störungsbehafteten) Zentralsteuerwerk zugeordneten Gruppe von Schalteinrichtungen in Verbindung treten kann.

Bei einem Parallelbetrieb von Zentralsteuerwerken in der angesprochenen Weise arbeitet also im störungsfreien Betrieb jeweils ein Zentralsteuerwerk mit den Schalteinrichtungen der ihm zugeordneten Gruppe zusammen. Deshalb werden Zentralsteuerwerk und die Schalteinrichtungen der ihm zugeordneten Gruppe auch aufbaumäßig so zusammengefaßt, daß sie eine Einheit bilden, indem sie z. B. in einem Gestellrahmen untergebracht sind. Bei den angesprochenen Schalteinrichtungen kann es sich um abhängige teilzentrale Steuereinrichtungen, um Teilspeicher, um Abschlußschaltungen von Datenübertragungsstrecken und dergleichen handeln. Je nach der jeweiligen räumlichen Ausdehnung, über die sich eine Datenbusleitung von einem Zentralsteuerwerk zu den Schalteinrichtungen seiner Gruppe erstreckt, ist ein Busverstärker erforderlich. Solche Busverstärker sind in der Regel bidirektional, weil eine Datenübertragung sowohl von einem Zentralsteuerwerk zu jeder der Schalteinrichtungen, als auch in umgekehrter Richtung durchgeführt werden können muß. Hauptsächlich sind solche Busverstärker aber erforderlich für den Ersatzschaltebetrieb. Hierbei ist es – wie bereits erläutert – erforderlich, daß ein Zentralsteuerwerk mit den Schalteinrichtungen der dem jeweils anderen Zentralsteuerwerk zugeordneten Gruppe zusammenarbeiten kann. Naturgemäß weisen die hierfür vorgesehenen Datenbushilfsleitungen eine größere räumliche Länge auf als die Datenbusleitungen, und deshalb werden Busverstärker in der Hauptsache in diesen Datenbushilfsleitungen verwendet.

Die Busverstärker haben nicht nur die Aufgabe der Verstärkung (gegebenenfalls auch der Entzerrung) der zu übertragenden Signale, sondern auch die Aufgabe der Ankopplung und Abkopplung. Im Ersatzschaltefall muß das das störungsbehaftete Zentralsteuerwerk vertretende ungestörte Zentralsteuerwerk mit den der dem störungsbehafteten Zentralsteuerwerk zugeordneten Gruppe von Schalteinrichtungen zusammenarbeiten können. Deshalb muß die betreffende Datenbushilfsleitung für den Ersatzschaltbetrieb an das ungestörte Zentralsteuerwerk, insbesondere an seine Datenbusleitung, angekoppelt werden. Bei Beendigung des Ersatzschaltbetriebes muß diese Datenbushilfsleitung entsprechend wieder abgekoppelt werden, damit nun der störungsfreie Parallelbetrieb beider Zentralsteuerwerke weitergeführt werden kann.

Es gibt darüber hinaus aber auch den weiteren Störungsfall, daß ein Zentralsteuerwerk zusammen mit den Schalteinrichtungen seiner Gruppe von einem Ausfall der Betriebsspannung betroffen wird. Hat also ein Zentralsteuerwerk mit den Schalteinrichtungen seiner Gruppe eine gemeinsame Spannungsversorgung, und fällt diese aus, so ist nicht nur dieses Zentralsteuerwerk außer Betrieb gesetzt, sondern auch die Schalteinrichtungen der ihm zugeordneten Gruppe. In einem solchen Störungsfall erübrigt sich also eine Ersatzschaltung, weil außer dem betreffenden Zentralsteuerwerk auch die ihm zugeordneten Schalteinrichtungen nicht betriebsbereit sind. Ein solcher Störungsfall stellt in einer Schaltungsanordnung der eingangs angegebenen Art das Problem der Abkopplung der Datenbushilfsleitung, die zu den Schalteinrichtungen derjenigen Gruppe führt, die von dem Spannungsausfall mitbetroffen ist. Ob der betreffende Busverstärker hierbei von dem genannten Spannungsausfall mitbetroffen ist oder nicht, ist in diesen beiden möglichen Fällen eine sichere Abkopplung infrage gestellt. Eine solche Abkopplung ist erforderlich, damit von den Schalteinrichtungen, die von dem Spannungsausfall betroffen sind, nicht Störungseinflüsse auf die Datenbusleitung gelangen können, die von dem von dem Spannungsausfall nicht betroffenen Zentralsteuerwerk zu den ihm zugeordneten Schalteinrichtungen verläuft. Solche störenden Einflüsse können z. B. in einer Abgabe von Adreßinformationen oder von anderen Daten bestehen, oder in einer Anlegung von störenden oder sperrenden Dauerpotentialen.

Eine Schaltungsanordnung der eingangs angegebenen bekannten Art ist ferner der Zeitschrift "telcom report", Band 7, Nr. 2, März/April 1984, Seiten 93 – 98 zu entnehmen. Einer Trennung des betreffenden Steuerungs-Systems in zwei Prozessorhälften entsprechen zwei unabhängige Stromversorgungen. Jeder Prozessor besitzt also eine eigene Stromversorgung. Ferner gibt diese Literaturstelle Hinweise auf eine Entkopplung im Fehlerfall. In dieser Zusammenhang sind bestimmte, in obiger Zeitschrift dargestellte und beschriebene Buserweiterungseinheiten von besonderer Bedeutung.

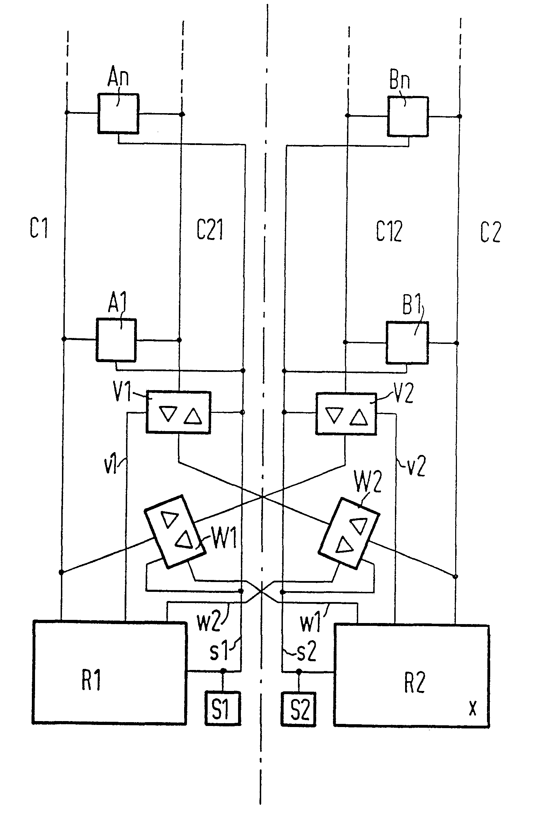

Fällt zum Beispiel die Stromversorgung für sämtliche Einrichtungen unterhalb der strichpunktierten Linie in Bild 2 auf Seite 95 aus, so stellt sich die Frage, wie ein Bus vom anderen entkoppelt wird. Hierzu ist angegeben, daß die beiden Hälften des Prozessor so lose miteinander gekoppelt sind, daß ein gegenseitiges Beeinflussen unterbleibt. Es ist aber nicht angegeben, wie eine solche lose Kopplung bewerkstelligt wird. Es ist also nicht zu entnehmen, wie eine Übertragung von Daten über die Buserweiterungseinheiten einerseits im störungsfreien Betrieb durchgeführt werden kann und andererseits im Störungsfalle mit Sicherheit unterbunden werden kann. Denn wenn die Stromversorgung für sämtliche Einrichtungen, z. B. unterhalb der im genannten Bild strichpunktiert dargestellten Linie, ausfällt, sind die übertragungstechnischen Verhältnisse innerhalb der betreffenden Buserweiterungseinheit BEU 1 : 1 aufgrund fehlender Stromversorgung undefiniert, wobei also nicht gewährleistet ist, ob Kopplung oder Entkopplung praktisch zum Tragen kommt. Die entsprechende Buserweiterungseinheit BEU 0 : 1 dagegen *empfängt* ihre Stromversorgung; über sie kann die Übertragung von Daten in beiden Richtungen ungehindert erfolgen. Insgesamt betrachtet bestehen also bezüglich Kopplung bzw. Entkopplung zwischen dem einen und dem anderen Bus undefinierte Verhältnisse.

Für die Erfindung besteht deshalb die Aufgabe, für eine Schaltungsanordnung der eingangs angegebenen Art eine eindeutige Abkopplung einer Datenbushilfsleitung für den Fall des Ausfalles der Spannungsversorgung eines Zentralsteuerwerkes zusammen mit der Spannungsversorgung der ihm zugeordneten Schalteinrichtungen zu gewährleisten.

Die Erfindung löst die gestellte Aufgabe dadurch, daß der erste Busverstärker der einen Gruppe – bzw. der anderen Gruppe – von teilzentralen Schalteinrichtungen eine gemeinsame Stromversorgung mit dem Zentralsteuerwerk dieser Gruppe – bzw. der anderen Gruppe – und der zweite Busverstärker eine gemeinsame Stromversorgung mit dem jeweils anderen Zentralsteuerwerk hat, und daß jeder der mit jeweils einem Zentralsteuerwerk verbundenen Busverstärker über eine Signalleitung mit dem jeweils anderen Zentralsteuerwerk verbunden ist, über die bei Ausfall der Spannungsversorgung eines Zentralsteuerwerkes und der ihm zugeordneten Gruppe von teilzentralen Schalteinrichtungen sowie des mit diesen verbundenen Busverstärkers ein Abschaltesignal an den mit diesem in Reihe geschalteten und mit dem jeweils anderen Zentralsteuerwerk verbundenen Busverstärker gegeben wird, durch welches in diesem Busverstärker eine wirksame Unterbrechung der über den Busverstärker mit fehlender Spannungsversorgung verlaufenden Datenbushilfsleitung bewerkstelligt wird.

Durch das IBM TECHNICAL DISCLOSURE BULLETIN, Band 16, Nr. 5, Oktober 1973, Seiten 1586 – 1588, New York, US; W.G. SWENSON, "Alternate path control systems" ist bereits eine Schaltungsanordnung bekannt, in der unter der Bezeichnung "ISOLATOR AND COUPLER" eine Einrichtung angegeben ist, die zwei Bus-Leitungen trennt, wenn auf einer Seite die Stromversorgung ausfällt. Es ist aber keine Angabe darüber gemacht, wie diese Einrichtung überhaupt mit Strom versorgt wird, wie sie arbeitet und ob diese Einrichtung von der linken Seite oder von der rechten Seite oder separat mit Strom versorgt wird. Diese Literaturstelle zeigt zwei "GATING CIRCUITS", und zwar je einen GATING CIRCUIT bei je einem von den beiden parallelen zentralen Prozessoren. In der Regel ist immer einer von ihnen in Betrieb und einer außer Betrieb. Der in Betrieb befindliche Prozessor gibt ein Signal ab zu seinem eigenen GATING CIRCUIT und zu dem GATING CIRCUIT des jeweils anderen zentralen Prozessors. Dieses Signal bewirkt beim eigenen GATING CIRCUIT die Kopplung der betreffenden beiden Teil-Bus-Systeme und beim jeweils anderen GATING CIRCUIT die Entkopplung der betreffenden beiden anderen Teil-Bus-Systeme. Ferner ist angegeben, daß zwei unabhängig voneinander bestehende Stromversorgungen existieren für die beiden Seiten der Anordnung. Jedoch wird mit den "GATING CIRCUITS" lediglich beschrieben, daß ein Prozessor gewählt ist, d.h. sich in Betrieb befindet, während der andere Prozessor nicht gewählt ist, d.h. nicht in Betrieb ist. Der "INTERFACE CIRCUIT" des gerade in Betrieb befindlichen Prozessors bewirkt dann, daß der eigene "GATING CIRCUIT" durchschaltet (koppelt), während der "GATING CIRCUIT" der anderen Seite entkoppelt. Dies aber setzt voraus, daß der "GATING CIRCUIT" auf der anderen Seite auch von dieser anderen Seite her eine in Betrieb befindliche Stromversorgung hat, also seine Versorgung mit den erforderlichen Betriebsspannungen tatsächlich stattfindet. Die in Betrieb befindliche Seite gibt zu der nicht in Betrieb befindlichen Seite ein Signal ab, das hier eine Entkopplung zu bewerkstelligen hat. Damit eine solche Entkopplung auch tatsächlich bewerkstelligt wird, ist es erforderlich, daß die betreffende entkoppelnde Einrichtung "GATING CIRCUIT 2" in diesem Betriebszustand die für diese Entkopplung erforderliche Versorgung mit Betriebsspannung erhält, also tatsächlich stromversorgt ist.

Bei der Erfindung, die demgegenüber von ganz anderen Voraussetzungen ausgeht, geht es darum, daß eine Entkopplung bewerkstelligt werden muß, wenn jeweils die andere Seite infolge einer Unterbrechung der Stromversorgung außer Betrieb gegangen ist.

Während also im zuletzt behandelten bekannten Falle der genannte Befehl von dem in Betrieb befindlichen zentralen Prozessor ausgeht, geht er erfindungsgemäß von dem nicht in Betrieb befindlichen zentralen Prozessor aus, und zwar nur dann, wenn es sich hierbei darum handelt, daß dessen Stromversorgung von einer Unterbrechung betroffen ist. Während im bekannten Falle eine Entkopplung nur bei bestehenbleibender Stromversorgung bewerkstelligt zu werden braucht, wird erfindungsgemäß eine Entkopplung dann bewerkstelligt, wenn eine Unterbrechung der Stromversorgung eingetreten ist. Und während im bekannten Falle der die Entkopplung wirkende Befehl auf der außer Betrieb befindlichen Seite aufgenommen werden und ausgeführt werden muß, wird er erfindungsgemäß auf der in Betrieb bleibenden Seite ausgeführt. Hierzu wird die im Falle eines auf einer Seite auftretenden Spannungsausfalles entkoppelnde Einrichtung auf der anderen Seite von demjenigen Zentralsteuerwerk mitversorgt (auf der einen Seite), das von einer Störung der Stromversorgung selbst nicht betroffen ist; diese entkoppelnde Einrichtung erhält aber von dem anderen Zentralsteuerwerk (auf der rechten Seite), dessen Stromversorgung also von einer Störung betroffen ist, ein entsprechendes Signal, wodurch die Entkopplung in der betreffenden Einrichtung (W1) eindeutig bewerkstelligt ist.

In der Zeichnung ist ein Ausführungsbeispiel der Erfindung nur in wesentlich zu ihrem Verständnis beitragenden Bestandteilen dargestellt. Die Beschreibung knüpft an einen Artikel in der Zeitschrift "telcom report", 4. Jahrgang (1981), Beiheft, insbesondere Seiten 33 bis 37, an. Die weitere Beschreibung setzt also die darin gegebenen Erläuterungen als bekannt voraus.

In der zuvor genannten Zeitschrift ist also eine Fernsprechvermittlungsanlage mit zwei parallel arbeitenden Zentralsteuerwerken dargestellt. Es sind zwei Gruppen von teilzentralen Schalteinrichtungen vorgesehen, die dort als Eingabe-Ausgabe-Prozessoren und als Nachrichtenverteiler (MB) bezeichnet sind; in diesem Zusammenhang sei auch auf die deutsche Offenlegungsschrift 3 106 903 hingewiesen. – In der genannten Zeitschrift sind ferner zwei jeweils ein Zentralsteuerwerk mit den teilzentralen Schalteinrichtungen einer Gruppe verbindende bidirektionale Datenbusleitungen dargestellt. In Bild 1 auf Seite 34 der genannten Zeitschrift ist oberhalb der horizontal dargestellten strichpunktierten Linie ein Zentralsteuerwerk, eine Datenbusleitung und eine Gruppe von diesem Zentralsteuerwerk zugeordneten teilzentralen Schalteinrichtungen dargestellt; das gleiche gilt für die Darstellung in Bild 1 unterhalb der horizontal gezeichneten strichpunktierten Linie.

Ferner ist in der genannten Zeitschrift in Bild 1 auf Seite 34 dargestellt, daß die von jedem der beiden Zentralsteuerwerke ausgehende Datenbusleitung sich verzweigt; ein Abzweig von einer Datenbusleitung stellt eine Datenbushilfsleitung dar. Eine Datenbushilfsleitung verläuft von den teilzentralen Schalteinrichtungen jeweils einer Gruppe von dem der anderen Gruppe von teilzentralen Schalteinrichtungen zugeordneten Zentralsteuerwerk. Eine entsprechende Darstellung findet sich in der vorliegenden Zeichnung. Es sind zwei Zentralsteuerwerke R1 und R2 vorgesehen. Ferner sind Gruppen teilzentraler Schalteinrichtungen A1 bis An und B1 bis Bn vorgesehen. Ein Zentralsteuerwerk, z. B. R1, ist mit den teilzentralen Schalteinrichtungen der ihm zugeordneten Gruppe, z. B. A1 bis An, über die Datenbusleitung C1 verbunden. Entsprechendes gilt für das andere Zentralsteuerwerk und die andere Gruppe teilzentraler Schalteinrichtungen. Der von jedem der beiden Zentralsteuerwerke ausgehende Datenbus verzweigt sich zu einer Datenbusleitung, z. B. C1 und einer Datenbushilfsleitung, z. B. C12. Die Datenbushilfsleitung verbindet ein Zentralsteuerwerk, z. B. R1 mit den teilzentralen Schalteinrichtungen, z. B. B1 bis Bn, die dem anderen Zentralsteuerwerk, z. B. R2 zugeordnet sind.

Ebenso wie in der in der genannten Zeitschrift gegebenen Darstellung und Beschreibung ist es auch bei der in der Zeichnung wiedergegebenen Schaltungsanordnung vorgesehen, daß die beiden Zentralsteuerwerke im Parallelbetrieb arbeiten. Jedes von ihnen steht im Datenaustausch mit den teilzentralen Schalteinrichtungen der ihm zugeordneten Gruppe über die betreffende bidirektionale Datenbusleitung. Der Datenaustausch auf der einen Seite ist unabhängig vom Datenaustausch auf der anderen Seite und umgekehrt.

Bei Betriebsunterbrechung eines Zentralsteuerwerkes, z. B. R2 oder seiner zugeordneten Datenbusleitung, z. B. C2, findet in bekannter Weise ein Ersatzschaltbetrieb über die betreffende Datenbushilfsleitung, z. B. C12 statt. Dieser Ersatzschaltbetrieb steht unter dem Steuerungseinfluß des jeweils anderen Zentralsteuerwerkes, z. B. R1.

In die Datenbushilfsleitungen, z. B. C12 sind bidirektionale Busverstärker eingeschleift, die in Bild 1 auf Seite 34 der genannten Zeitschrift mit "BEU" bezeichnet sind und dort "Buserweiterungseinheit" genannt werden. Es sind jeweils zwei Busverstärker, z. B. W1, V2 in eine von einem Zentralsteuerwerk, z. B. R1 zu den teilzentralen Schalteinrichtungen, z. B. B1 bis Bn, der jeweils anderen Gruppe verlaufende Datenbushilfsleitung, z. B. C12 geschaltet. Ein erster, z. B. V2, ist mit den teilzentralen Schalteinrichtungen, z. B. B1 bis Bn, jeweils der einen Gruppe und ein zweiter mit dem Zentralsteuerwerk, z. B. R1 jeweils der anderen Gruppe von teilzentralen Schalteinrichtungen (A1 bis An) verbunden.

Wie aus der Zeichnung weiterhin zu entnehmen ist, ist jeder Gruppe von teilzentralen Schalteinrichtungen, z. B. A1 bis An, zusammen mit ihrem Zentralsteuerwerk, z. B. R1, je eine gemeinsame Stromversorgungseinrichtung, z. B. S1 zugeordnet. Ein Zentralsteuerwerk wird also gemeinsam mit den teilzentralen Schalteinrichtungen seiner Gruppe von einer eigenen Stromversorgungseinrichtung gespeist.

Wie weiterhin aus der Zeichnung zu entnehmen ist, hat der erste Busverstärker, z. B. V1, der einen Gruppe von teilzentralen Schalteinrichtungen, z. B. A1 bis An, eine gemeinsame Stromversorgung mit dem Zentralsteuerwerk, z. B. R1, dieser Gruppe. Die betreffende Stromversorgungsleitung ist in der Zeichnung mit "s1" bezeichnet. Diese Stromversorgungseinrichtung S1 und diese Stromversorgungsleitung s1 dienen zugleich zur Speisung der teilzentralen Schalteinrichtungen dieser Gruppe. Der andere Busverstärker für die Datenbushilfsleitung C21 der einen Gruppe von teilzentralen Schalteinrichtungen, z. B. A1 bis An, ist der Busverstärker W2. Er liegt mit dem ersten Busverstärker V1 in Reihe. Der zweite Busverstärker W2 der Datenbushilfsleitung C21 hat eine gemeinsame Stromversorgung mit dem anderen Zentralsteuerwerk R2 und mit den teilzentralen Schalteinrichtungen, z. B. B1 bis Bn dieser Gruppe. Die Stromversorgungseinrichtung S2 ist über die Stromversorgungsleitung s2 mit dem Zentralsteuerwerk R2, mit den teilzentralen Schalteinrichtungen B1 bis Bn und mit dem zweiten Busverstärker der Datenbushilfsleitung C21 über die Stromversorgungsleitung s2 verbunden.

Außer dem bekannten Störungsfall, bei dem eines der beiden Zentralsteuerwerke ausfällt, bei dem aber die ihm zugeordneten teilzentralen Schalteinrichtungen weiterhin betriebsbereit bleiben, und bei dem das andere Zentralsteuerwerk im Ersatzschaltebetrieb die Datenverarbeitungsvorgänge und/oder Steuervorgänge für sämtliche teilzentralen Schalteinrichtungen, also auch für die Gruppe der dem zur Zeit störungsbehafteten Zentralsteuerwerk zugeordneten teilzentralen Schalteinrichtungen abwickelt, gibt es auch den Störungsfall, daß die Stromversorgungseinrichtung eines Zentralsteuerwerkes, die auch die Gruppe der ihm zugeordneten teilzentralen Schalteinrichtungen mit Betriebsspannung versorgt, ausfällt. In einem solchen Störungsfall hat ein Ersatzschaltebetrieb keinen Sinn, oder ist − genauer gesagt − schlechthin nicht möglich, weil nicht nur das betreffende Zentralsteuerwerk sondern auch die Gruppe der ihm zugeordneten teilzentralen Schalteinrichtungen mangels Spannungsversorgung nicht betriebsbereit ist. In einem solchen Störungsfall muß dafür gesorgt sein, daß die Datenbusleitung des nicht gestörten Zentralsteuerwerkes nicht über die Datenbushilfsleitung derjenigen Gruppe von teilzentralen Schalteinrichtungen gestört wird, die dem zur Zeit von dem Spannungsausfall betroffenen Zentralsteuerwerk zugeordnet ist.

Es sei angenommen, daß das Zentralsteuerwerk R2, die teilzentralen Schalteinrichtungen B1 bis Bn und die Busverstärker V2 und W2 von einer Unterbrechung der Spannungsversorgung durch die Stromversorgungseinrichtung S2 betroffen sind. In einem solchen Störungsfall hat also u.a. auch der Busverstärker V2 keine Spannungsversorgung. Die in ihm enthaltenen Schaltkreise vermögen mangels ordnungsgemäßer Versorgung mit Betriebsspannung keine eindeutigen Schaltzustände einzunehmen. Die Datenbushilfsleitung C12 kann über den Busverstärker V2 ganz oder teilweise in Verbindung bleiben mit dem über diesen Busverstärker in Richtung zum Zentralsteuerwerk R1 hin weiterführenden Teil dieser Datenbushilfsleitung. Aus diesem Grunde ist der Busverstärker W1, der diese Datenbushilfsleitung mit dem Abzweig an der Datenbusleitung C1 verbindet, über eine Signalleitung w1 mit dem Zentralsteuerwerk R2 verbunden. Wird nun das Zentralsteuerwerk R2 von dem Störungsfall eines Ausfalles der Betriebsspannung betroffen, so gibt es ein entsprechendes Signal über die Signalleitung w1 zum Busverstärker W1 hin ab. Dieses Signal gibt die Zentralsteuerung R2 also bei Ausfall der Betriebsspannung und/oder immer dann ab, wenn es hinsichtlich Betriebsspannung unversorgt ist, also im spannungslosen (hinsichtlich Betriebsspannungs-Versorgung) Ruhezustand. Der Busverstärker W1 ist aber von dieser Unterbrechung der Versorgung mit Betriebsspannung (Ausfall der Stromversorgungseinrichtung S2) nicht betroffen, weil er von der Stromversorgungseinrichtung S1 die erforderliche Betriebsspannung erhält. Der Busverstärker W1 ist also in diesem Störungsfall uneingeschränkt betriebsfähig. Aufgrund des über die Signalleitung w1 empfangenen Signal es, durch welches das Zentralsteuerwerk R2 anzeigt, daß es selbst, sowie die ihm zugeordneten teilzentralen Schalteinrichtungen, sowie die Busverstärker V2 und W2 von einer Betriebsspannungsunterbrechung betroffen sind, nimmt der Busverstärker W1 eine Auftrennung der Datenbushilfsleitung zwischen dem Abzweig an der Datenbusleitung C1 und dem Busverstärker V2 vor. Der durch Erhalt der vollen Betriebsspannung weiterhin uneingeschränkt betriebsfähige Busverstärker W1 bewerkstelligt also eine vollständige Abkopplung der Datenbushilfsleitung C12 einschließlich des Busverstärkers V2 von der Datenbusleitung C1 und dem Zentralsteuerwerk R1. Dadurch ist verhindert, daß aus dem Bereich des Zentralsteuerwerks R2 und der ihm zugeordneten teilzentralen Schalteinrichtungen und Busverstärker irgendwelche Störungseinflüsse sich auf die Datenbusleitung C1 und über diese auf das Zentralsteuerwerk R1 sowie die ihm zugeordneten teilzentralen Schalteinrichtungen auswirken können.

In der vorliegenden Beschreibung sind Zentralsteuerwerke und teilzentrale Schalteinrichtungen genannt. Die Erfindung ist keineswegs im
Hinblick auf den Zentralisierungsgrad darauf beschränkt, daß die Zentralsteuerwerke den jeweils
höchsten Zentralisierungsgrad einnehmen. Vielmehr können die Zentralsteuerwerke auch teilzentrale Verarbeitungseinrichtungen und/oder
Steuereinrichtungen sein, die jeweils über eine
Datenbusleitung mit ihnen zugeordneten Schalteinrichtungen geringeren Zentralisierungsgrades
zusammenarbeiten. Auch ist die Erfindung nicht
auf den Anwendungszweck beschränkt, sondern
außer ausgesprochenen Steuerungsvorgängen
können Verarbeitungsvorgänge jeder anderen Art
vorgesehen sein.

Ferner sei auch noch die Funktion der Busverstärker V1 und V2 angesprochen. Es sei angenommen, daß das Zentralsteuerwerk R2 von
einer Betriebsunterbrechung betroffen sei, die
nicht auch die ihm zugeordnete Gruppe von teilzentralen Schalteinrichtungen B1 bis Bn betrifft.
In diesem Betriebszustand ist also das Zentralsteuerwerk R2 nicht betriebsbereit, jedoch
bleiben die ihm zugeordneten teilzentralen
Schalteinrichtungen B1 bis Bn betriebsbereit. In
diesem Betriebszustand gibt das Zentralsteuerwerk R2 ein Signal über die Signalleitung v2 zum
Busverstärker V2 hin ab und signalisiert diesem
die Tatsache der Betriebsunterbrechung im
Zentralsteuerwerk R2. Aufgrund dieses Signal es
nimmt der Busverstärker V2 eine Ankopplung der
Datenbushilfsleitung C12 an den Busverstärker
W1 vor. Über diesen ist dann die Datenbushilfsleitung C12 mit der Datenbusleitung C1 und
damit mit dem Zentralsteuerwerk R1 verbunden.
Es kann vorgesehen sein, daß der Busverstärker
W1 die Verbindung zwischen der Datenbusleitung C1 und dem Busverstärker V2 alleine aufgrund der Betriebsbereitschaft des Zentralsteuerwerkes R1 herstellt oder aber auch aufgrund
eines zusätzlichen Signales seitens des Zentralsteuerwerkes R2, das dieses aufgrund seiner Betriebsunterbrechung an den Busverstärker W1
abgibt. Dieses Signal, durch das also eine Ankopplung der Datenbushilfsleitung C12 an die
Datenbusleitung C1 gefordert wird, kann ebenfalls über die Signalleitung w1 übertragen
werden.

Da die Anlage spiegelsymmetrisch aufgebaut
ist, gilt die gesamte Beschreibung auch für die
Betriebsfälle, in denen das Zentralsteuerwerk R1
von Störungen betroffen ist und das Zentralsteuerwerk R2 weiterhin betriebsbereit bleibt.

**Patentansprüche**

1. Schaltungsanordnung für zentralgesteuerte
Fernmeldevermittlungsanlagen, insbesondere
Fernsprechvermittlungsanlagen, mit zwei parallel
arbeitenden Zentralsteuerwerken (R1, R2) und
zwei Gruppen von teilzentralen Schalteinrichtungen (A1, ... An; B1, ... Bn) und mit zwei jeweils
ein Zentralsteuerwerk (z. B. R1) mit den teilzentralen Schalteinrichtungen (z. B. A1, ... An) einer
Gruppe verbindenden bidirektionalen Datenbusleitungen, (z. B. C1) und mit zwei die teilzentralen
Schalteinrichtungen (z. B. A1, ... An) jeweils einer
Gruppe mit dem der anderen Gruppe von teilzentralen Schalteinrichtungen (z. B. B1, ... Bn) zugeordneten Zentralsteuerwerk (z. B. R2) verbindenden bidirektionalen Datenbushilfsleitungen (z. B.
C21), und mit Parallelbetrieb beider Zentralsteuerwerke (R1, R2) im Datenaustausch mit den
teilzentralen Schalteinrichtungen der ihnen
jeweils zugeordneten Gruppe (A1, ... An; B1, ...
Bn) über die betreffende bidirektionale Datenbusleitung (C1, C2) und mit bei Betriebsunterbrechung eines Zentralsteuerwerkes (z. B. R1) oder
seiner zugeordneten Datenbusleitung (z. B. C1)
vorgesehenen Ersatzschaltebetrieb über jeweils
die Datenbushilfsleitung (z. B. C21), die von dem
jeweils anderen Zentralsteuerwerk (z. B. R2) zu
den teilzentralen Schaltwerken (z. B. A1, ... An)
der Gruppe des von der Betriebsunterbrechung
betroffenen Zentralsteuerwerks (z. B. R1) verläuft, und mit in die Datenbushilfsleitungen (C21,
C22) eingeschleiften bidirektionalen Busverstärkern (V1, V2, W1, W2), von denen je zwei (z. B.
W2, V1) in eine von einem Zentralsteuerwerk (z.
B. R2) zu den teilzentralen Schalteinrichtungen
(z. B. A1, ... An) der jeweils anderen Gruppe verlaufende Datenbushilfsleitung (z. B. C21) geschaltet sind, und von denen jeweils ein erster (z.
B. V1) mit den teilzentralen Schalteinrichtungen
(z. B. A1, ... An) der einen Gruppe und ein
zweiter (z. B. W2) mit dem Zentralsteuerwerk (z.
B. R2) der anderen Gruppe von teilzentralen
Schalteinrichtungen (z. B. B1, ... Bn) verbunden
ist, *dadurch gekennzeichnet*, daß der erste Busverstärker (z. B. V1) der einen Gruppe (z. B. A1,
... An) – bzw. der anderen Gruppe – von teilzentralen Schalteinrichtungen eine gemeinsame
Stromversorgung (z. B. S1/s1) mit dem Zentralsteuerwerk (z. B. R1) dieser Gruppe – bzw. der
anderen Gruppe – und der zweite Busverstärker
(z. B. W2) eine gemeinsame Stromversorgung (z.
B. S2/s2) mit dem jeweils anderen Zentralsteuerwerk (z. B. R2) hat, und daß jeder der mit
jeweils einem Zentralsteuerwerk (z. B. R2) verbundenen Busverstärker (z. B. W2) über eine Signalleitung (z. B. w2) mit dem jeweils anderen
Zentralsteuerwerk (z. B. R1) verbunden ist, über
die bei Ausfall der Spannungsversorgung (z. B.
S1/s1) eines Zentralsteuerwerkes (z. B. R1) und
der ihm zugeordneten Gruppe von teilzentralen
Schalteinrichtungen (z. B. A1, ... An) sowie des
mit diesen verbundenen Busverstärkers (z. B. V1)
ein Abschaltesignal an den mit diesem in Reihe
geschalteten und mit dem jeweils anderen Zentralsteuerwerk (z. B. R2) verbundenen Busverstärker (z. B. W2) gegeben wird, durch welches in
diesem Busverstärker (z. B. W2) eine wirksame
Unterbrechung der über den Busverstärker (z. B.
V1) mit fehlender Spannungsversorgung verlaufenden Datenbushilfsleitung (z. B. C21) bewerkstelligt wird.

2. Schaltungsanordnung nach Anspruch 1, *dadurch gekennzeichnet*, daß im Ersatzschaltefall bei Betriebsunterbrechung in einem Zentralsteuerwerk (z. B. R1) und bei Fortbestand der Betriebsbereitschaft in den ihm zugeordneten teilzentralen Schalteinrichtungen (z. B. A1, ... An) ein Signal von diesem Zentralsteuerwerk (z. B. R1) zu dem ersten und/oder zweiten Busverstärker (z. B. V1 und/oder W2) hin abgegeben wird, durch das eine Ankopplung der zu den diesem Zentralsteuerwerk (z. B. R1) zugeordneten teilzentralen Schalteinrichtungen (z. B. A1, ... An) führenden Datenbushilfsleitung (z. B. C21) an das andere Zentralsteuerwerk (z. B. R2) bewerkstelligt wird.

**Revendications**

1. Montage pour des centraux de télécommunications à commande centrale, notamment des centraux téléphoniques, comportant deux unités centrales de commande (R1, R2) travaillant en parallèle et deux groupes de dispositifs de commutation partiellement centraux (A1, ... An, B1, ... Bn), et comportant deux lignes bidirectionelles formant bus de transmission de données (par exemple C1), reliant respectivement une unité centrale de commande (par exemple R1) aux dispositifs de commutation partiellement centraux (par exemple A1, ... An) d'un groupe, et comportant deux lignes auxiliaires bidirectionelles formant bus de transmission de données (par exemple C21), reliant les dispositifs de commutation partiellement centraux (par exemple A1, ... An) d'un groupe respectif à l'unité centrale de commande (par exemple R2) associée à l'autre groupe de dispositifs de commutation partiellement centraux (par exemple B1, ... Bn), avec un fonctionnement en parallèle des deux unités centrales de commande (R1, R2) lors de l'échange des données avec les dispositifs de commutation partiellement centraux du groupe (A1 ... An, B1, ... Bn), qui leur est associé, par l'intermédiaire de la ligne bidirectionelle formant bus de données considérée (C1, C2), et avec un fonctionnement de commutation de remplacement, prévu dans le cas d'une interruption du fonctionnement d'une unité centrale de commande (par exemple R1) ou de la ligne formant bus de transmission de données (par exemple C1), qui est associée à cette unité de commande, et exécuté par l'intermédiaire de la ligne auxiliaire formant bus de transmission de données (par exemple C21), qui relie l'autre unité centrale respective de commande (par exemple R2) aux dispositifs de commutation partiellement centraux (par exemple A1, ... An) du groupe de l'unité de commande centrale (par exemple R1) concernée par l'interruption de fonctionnement, et comportant des amplificateurs bidirectionels de bus (V1, V2, W1, W2), insérés dans les lignes auxiliaires formant bus de transmission de données (C21, C22) et parmi lesquels deux amplificateurs respectifs (par exemple W2, V1) sont branchés dans une ligne auxiliaire formant bus de transmission de données (par exemple C21), qui relie une unité centrale de commande (par exemple R2) aux dispositifs de commutation partiellement centraux (par exemple A1, ... An) de l'autre groupe respectif, et parmi lesquels respectivement un premier amplificateur (par exemple V1) est relié aux dispositifs de commutation partiellement centraux (par exemple A1, ... An) d'un second groupe et un second amplificateur (par exemple W2) est relié à l'unité centrale de commande (par exemple R2) de l'autre groupe de dispositifs de commutation partiellement centraux (par exemple B1, ... Bn), caractérisé par le fait que le premier amplificateur de bus (par exemple V1) d'un groupe (par exemple A1, ... An) – ou de l'autre groupe – de dispositifs de commutation partiellement centraux comporte une alimentation en courant (par exemple S1/s1) commune avec l'unité centrale de commande (par exemple R1) de ce groupe – ou de l'autre groupe – et que le second amplificateur de bus (par exemple W2) possède une alimentation en courant (par exemple S2/s2) commune avec l'autre unité respective de commande centrale (par exemple R2), et que chacun des amplificateurs de bus (par exemple W2) relié à une unité centrale respective de commande (par exemple R2) est relié à l'autre unité centrale respective de commande (par exemple R1) par l'intermédiaire d'une ligne de transmission de signaux (par exemple w2), par l'intermédiaire de laquelle, dans le cas d'une défaillance de l'alimentation en tension (par exemple S1/s1) d'une unité centrale de commande (par exemple R1) et du groupe, qui lui est associé, de dispositifs de commutation partiellement centraux (par exemple A1, ... An) ainsi que de l'amplificateur de bus (par exemple V1), qui est relié à ces dispositifs, un signal d'interruption est envoyé l'amplificateur de bus (par exemple W2) branché en série avec cet amplificateur et relié à l'autre unité centrale respective de commande (par exemple R2), ce signal déclenchant, dans cet amplificateur de bus (par exemple W2), une interruption effective de la ligne auxiliaire formant bus de transmission de données (par exemple C21) passant par l'amplificateur de bus (par exemple V1), dont l'alimentation en tension est défaillante.

2. Montage suivant la revendication 1, caractérisé par le fait que, dans le cas d'une commutation de remplacement lors de l'interruption du fonctionnement dans une unité centrale de commande (par exemple R1) et dans le cas où les dispositifs de commutation partiellement centraux (par exemple A1, ... An), qui sont associés à cette unité centrale de commande, continuent à être dans leur état prêt à fonctionner, cette unité centrale de commande (par exemple T1) envoie en direction du premier et/ou du second amplificateur de bus (par exemple V1 et/ou W2), un signal qui déclenche un couplage de la ligne au-

13

xiliaire formant bus de transmission de données (par exemple C21) aboutissant aux dispositifs de commutation partiellement centraux (par exemple A1, ... An), associés à cette unité centrale de commande (par exemple R1), à l'autre unité centrale de commande (par exemple R2).

**Claims**

1. Circuit arrangement for centrally controlled telecommunication exchanges, particularly telephone exchanges, with two common control units (R1, R2) operating in parallel and two groups of intermediate-level switching devices (A1, ... An; B1, ... Bn) and with two bidirectional data bus lines (for example C1), which in each case connect one common control unit (for example R1) to the intermediate-level switching devices (for example A1, ... An) of one group, and with two bidirectional auxiliary data bus lines (for example C21), which connect the intermediate-level switching devices (for example A1, ... An) of in each case one group to the common control unit (for example R2) allocated to the other group of intermediate-level switching devices (for example B1, ... Bn), and with parallel operation of both common control units (R1, R2) in data exchange with the intermediate-level switching devices of the group (A1, ... An; B1, ... Bn) in each case allocated to them via the relevant bidirectional data bus line (C1, C2), and with changeover operation, provided in the event of an interruption of operation of a common control unit (for example R1) or its associated data bus line (for example C1), via in each case the auxiliary data bus line (for example C21) which extends from the in each case other common control unit (for example R2) to the intermediate-level switching units (for example A1, ... An) of the group of the common control unit (for example R1) affected by the interruption of operation, and with bidirectional bus amplifiers (V1, V2, W1, W2) which are looped into the auxiliary data bus lines (C21, c22) and of which two each (for example W2, V1) are connected into an auxiliary data bus line (for example C21) extending from a common control unit (for example R2) to the intermediate-level switching devices (for example A1, ... An) of the in each case other group, and of which in each case a first one (for example V1) is connected to the intermediate-level switching devices (for example A1, ... An) of one group and a second one (for example W2) is connected to the common control unit (for example R2) of the other group of intermediate-level switching devices (for example B1, ... Bn), characterized in that the first bus amplifier (for example V1) of one group (for example A1, ... An) – or of the other group – of intermediate-level switching devices has a common power supply (for example S1/s1) with the common control unit (for example R1) of this group – or of the other group – and the second bus amplifier (for example W2) has a common power supply (for example S2/s2) with the other

14

common control unit in each case (for example R2), and in that each of the bus amplifiers (for example W2) connected to in each case one common control unit (for example R2) is connected via a signal line (for example W2) to the other common control unit in each case (for example R1), via which, in the event of a failure of the voltage supply (for example S1/s1) of a common control unit (for example R1) and its associated group of intermediate-level switching devices (for example A1, ... An) and of the bus amplifier (for example V1) connected to these, a switch-off signal is given to the bus amplifier (for example W2) connected in series with the latter and connected to the other common control unit (for example R2) in each case, by means of which signal an effective interruption of the auxiliary data bus line (for example C21) extending via the bus amplifier (for example V1) with lacking voltage supply is effected, in this bus amplifier (for example W2).

2. Circuit arrangement according to Claim 1, characterized in that in the case of change-over in the event of an interruption of operation in a common control unit (for example R1) and in the case of continuing ready status in its associated intermediate-level switching devices (for example A1, ... An), a signal is delivered from this common control unit (for example R1) to the first and/or second bus amplifier (for example V1 and/or W2), by means of which a coupling of the auxiliary data bus lines (for example C21) leading to the intermediate-level switching devices (for example A1, ... An) associated with this common control unit (for example R1) to the other common control unit (for example R2) is effected.